(19) **Europäisches Patentamt** / **European Patent Office** / **Office européen des brevets**

(11) **EP 4 694 014 A1**

(12) **EUROPEAN PATENT APPLICATION**
published in accordance with Art. 153(4) EPC

(43) Date of publication:
**11.02.2026 Bulletin 2026/07**

(21) Application number: **24795439.9**

(22) Date of filing: **09.01.2024**

(51) International Patent Classification (IPC):
**H04L 5/00** (2006.01)

(52) Cooperative Patent Classification (CPC):
**H04L 5/00**

(86) International application number:
**PCT/CN2024/071434**

(87) International publication number:
**WO 2024/222049 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.04.2023 CN 202310493207**

(71) Applicant: **Huawei Technologies Co., Ltd.
Shenzhen, Guangdong 518129 (CN)**

(72) Inventors:
• **HUANG, Huang**
  **Shenzhen, Guangdong 518129 (CN)**
• **MA, Qianli**
  **Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **COMMUNICATION METHOD, COMMUNICATION APPARATUS AND COMPUTER-READABLE STORAGE MEDIUM**

(57) This application provides a communication method, a communication apparatus, and a computer-readable storage medium. The method includes: determining a position of a main symbol occupied by a reference signal when a single subcarrier width is used, where the main symbol includes N sub-symbols including a sub-symbol used for sending a reference signal and a sub-symbol used for sending data, N>1, and N is an integer; and sending or receiving a reference signal by using the sub-symbol used for sending a reference signal, and sending or receiving the reference signal by using the sub-symbol used for sending data. According to the method provided in this application, the main symbol is split into a plurality of sub-symbols, some for sending or receiving reference signals, and some for sending or receiving data. In this way, signaling overheads can be reduced while alignment between a plurality of main symbols is ensured.

| <38.211-Table 4.3.2-1> | | | |
|---|---|---|---|
| $\mu$ | $N_{symb}^{slot}$ | $N_{slot}^{frame,\mu}$ | $N_{slot}^{subframe,\mu}$ |
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

FIG. 1

## Description

This application claims priority to Chinese Patent Application No. 202310493207.6, filed with the China National Intellectual Property Administration on April 28, 2023 and entitled "COMMUNICATION METHOD, COMMUNICATION APPARATUS, AND COMPUTER-READABLE STORAGE MEDIUM", which is incorporated herein by reference in its entirety.

## TECHNICAL FIELD

This application relates to the field of communication technologies, and more specifically, to a communication method, a communication apparatus, and a computer-readable storage medium.

## BACKGROUND

In long term evolution LTE/long term evolution-advanced (LTE-advanced, LTE-A)/NR systems defined in the 3rd generation partnership project (3rd Generation Partnership Project, 3GPP), orthogonal frequency division multiple access (orthogonal frequency division multiple access, OFDMA) is typically used for downlink multiple access. Downlink resources are divided into a plurality of orthogonal frequency division multiplexing (orthogonal frequency division multiplexing, OFDM) symbols in time (time domain) and a plurality of subcarriers in frequency (frequency domain).

In related technologies, to implement channel tracking, a complete CP-OFDM symbol may be used for transmission of a reference signal. However, this approach results in large signaling overheads. To reduce signaling overheads, a subcarrier width of the CP-OFDM symbol may be increased in related technologies. However, increasing the subcarrier width of the CP-OFDM symbol may cause significant misalignment of a large quantity of CP-OFDM symbols among a plurality of users, making it impossible to achieve frequency orthogonality between users, and ultimately causing channel demodulation failures at a receive end.

Therefore, there is an urgent need to resolve the problem of how to reduce signaling overheads while ensuring alignment between CP-OFDM symbols among users currently.

## SUMMARY

This application provides a communication method, a communication apparatus, and a computer-readable storage medium. A main symbol used for sending a reference signal is split into a plurality of sub-symbols, some for sending the reference signal, and some for sending data, to reduce signaling overheads while alignment between a plurality of main symbols can be ensured.

According to a first aspect, a communication method is provided. The method provided in the first aspect may be performed by a network device, may be performed by a terminal device, may be performed by a chip configured in the network device, or may be performed by a chip configured in the terminal device. This is not limited in this application.

Specifically, the method includes: determining a position of a main symbol occupied by a reference signal when a single subcarrier width is used, where the main symbol includes N sub-symbols, the N sub-symbols include a sub-symbol used for sending a reference signal and a sub-symbol used for sending data, N>1, and N is an integer; and sending or receiving a reference signal by using the sub-symbol used for sending a reference signal, and sending or receiving data by using the sub-symbol used for sending data.

According to the method provided in the first aspect, the main symbol is split into a plurality of sub-symbols based on the position of the main symbol occupied by the reference signal when the single subcarrier width is used. A part of the plurality of sub-symbols are used for sending or receiving the reference signal, and the other part of the plurality of sub-symbols are used for sending or receiving the data. This reduces overheads of sending the reference signal, while alignment between the plurality of main symbols is ensured. In other words, the overheads are reduced while frequency orthogonality of a plurality of receive ends is ensured, ensuring that data is successfully demodulated by the receive end.

In a possible implementation of the first aspect, the main symbol having the single subcarrier width includes a main symbol used for sending a reference signal and a main symbol used for sending data. In this implementation, the main symbol having the single subcarrier width may be the main symbol used for sending the reference signal, or may be the main symbol used for sending the data. In this embodiment of this application, the main symbol occupied by the reference signal when the single subcarrier width is used is split into the plurality of sub-symbols.

In a possible implementation of the first aspect, a position of the sub-symbol used for sending a reference signal or a position of the sub-symbol used for sending a data signal is predefined.

For example, the sub-symbol used for sending the reference signal may be a 1st sub-symbol. In this implementation, the receive end can quickly demodulate a channel.

For another example, the sub-symbol used for sending the reference signal may be a 2nd sub-symbol. In this implementation, extending a CP of the sub-symbol of the reference signal to a previous sub-symbol can improve an anti-multipath capability of the reference signal.

In a possible implementation of the first aspect, the sub-symbol used for sending the reference signal may be indicated by the network device, and this implementation can flexibly adapt to various scenarios.

In a possible implementation of the first aspect, a subcarrier width of each sub-symbol is N times a subcarrier width of the main symbol, or a subcarrier width of each sub-symbol is related to at least one of a subcarrier width of the main symbol, N, and a length of a cyclic prefix CP of the main symbol.

For example, when the subcarrier width of the main symbol is 15 kHz, and the subcarrier width of the sub-symbol is 30 kHz, the main symbol is split into two sub-symbols.

In a possible implementation of the first aspect, a length of each sub-symbol excluding a CP is 1/N of a length of the main symbol excluding the CP, and a length of the CP of each sub-symbol is 1/N of the length of the CP of the main symbol. In this implementation, the length of each sub-symbol excluding the CP may be calculated by dividing the length of the main symbol excluding the CP by N, and the length of the CP of each sub-symbol may be calculated by dividing the length of the CP of the main symbol by N. The length of each sub-symbol calculated in this manner is the same. In other words, the length of the CP of the main symbol is evenly allocated to each sub-symbol, so that total duration of the main symbol is the same as total duration of all corresponding sub-symbols.

In a possible implementation of the first aspect, a length of each sub-symbol excluding a CP is related to at least one of a length of the main symbol excluding the CP, the length of the CP of the main symbol, a length of a CP of each sub-symbol, and a quantity N of sub-symbols.

For example, the length of each sub-symbol excluding the CP, the length of the main symbol excluding the CP, the length of the CP of the main symbol, the length of the CP of the sub-symbol, and the quantity N of sub-symbols satisfy the following formula:

$$A = \frac{L_D + L_{CP} - N \times A_{CP}}{N}.$$

A represents the length of each sub-symbol excluding the CP, $L_D$ represents the length of the main symbol excluding the CP, $L_{CP}$ represents the length of the CP of the main symbol, N represents the quantity of sub-symbols, and $A_{CP}$ represents the length of the CP of each sub-symbol.

In a possible implementation of the first aspect, each sub-symbol has a same length of CP.

In a possible implementation of the first aspect, the length of the CP of each sub-symbol is equal to the length of the CP of the main symbol. In this implementation, it can be ensured that an anti-multipath capability of the sub-symbol is similar to an anti-multipath capability of the main symbol.

In a possible implementation of the first aspect, at least two of the N sub-symbols have different lengths of CPs.

In a possible implementation of the first aspect, a length of a CP of the sub-symbol used for sending a reference signal is greater than or equal to a length of a CP of the sub-symbol used for sending data signal. In this implementation, to adapt to various scenarios, the length of the CP of the sub-symbol may be randomly specified.

In a possible implementation of the first aspect, when the N sub-symbols include a sub-symbol with a first length and a sub-symbol with a second length, and a quantity of sub-symbols with the first length is n, a length of a CP of the sub-symbol with the first length satisfies the following formula:

$$L_1 = \left[ L_{CP} - [\frac{L_{cp}}{N}] * (N - n) \right] / n.$$

$L_1$ represents the length of the CP of the sub-symbol with the first length, $L_{CP}$ represents the length of the CP of the main symbol, N represents the quantity of sub-symbols, and n represents the quantity of sub-symbols with the first length.

A length of a CP of the sub-symbol with the second length satisfies the following formula:

$$L_2 = \left[ \frac{L_{cp}}{N} \right].$$

$L_2$ represents the length of the CP of the sub-symbol with the second length. In this implementation, the sub-symbol with the first length may be understood as a specific sub-symbol, and the sub-symbol with the second length may be understood as a non-specific sub-symbol. When the length of the CP of the main symbol cannot be evenly allocated, and there are n specific sub-symbols, a length of a CP of the specific sub-symbol and a length of a CP of the non-specific sub-symbol may be calculated by using the foregoing formula.

In a possible implementation of the first aspect, when the N sub-symbols include a sub-symbol with a first length and a sub-symbol with a second length, and there are a plurality of sub-symbols with the first length, a length of a CP of the sub-symbol with the first length satisfies the following formula:

$$L_1 = \left[ K_{CP} - \left[ \frac{K_{CP}}{N} \right] * (N - n) \right] / n.$$

$L_1$ represents the length of the CP of the sub-symbol with the first length, $K_{CP}$ represents a sum of the sub-symbols, N represents the quantity of sub-symbols, and n represents the quantity of sub-symbols with the first length.

The length of the CP of the sub-symbol with the second length satisfies the following formula:

$$L_2 = \left[ \frac{K_{CP}}{N} \right].$$

$L_2$ represents the length of the CP of the sub-symbol with the second length. In this implementation, the sub-symbol with the first length may be understood as a specific sub-symbol, the sub-symbol with the second length may be understood as a non-specific sub-symbol, and a length of a CP of the specific sub-symbol may be greater than a length of a CP of the non-specific sub-symbol. When a total length of the non-specific sub-symbols cannot be evenly allocated, and there are n specific sub-symbols, the length of the CP of the specific sub-symbol and the length of the CP of the non-symbol may be calculated by using the foregoing formula.

According to a second aspect, a communication apparatus is provided. The communication apparatus includes:

a processing unit, where the processing unit is configured to determine a position of a main symbol occupied by a reference signal when a single subcarrier width is used, where the main symbol includes N sub-symbols, the N sub-symbols include a sub-symbol used for sending a reference signal and a sub-symbol used for sending data, N>1, and N is an integer; and

a sending unit or a receiving unit, where the sending unit or the receiving unit is configured to send or receive a reference signal by using the sub-symbol used for sending a reference signal, and send or receive data by using the sub-symbol used for sending data.

According to the apparatus provided in the second aspect, the main symbol is split into a plurality of sub-symbols based on the position of the main symbol occupied by the reference signal when the single subcarrier width is used. A part of the plurality of sub-symbols are used for sending or receiving the reference signal, and the other part of the plurality of sub-symbols are used for sending or receiving the data. This reduces overheads of sending the reference signal, while alignment between the plurality of main symbols is ensured. In other words, the overheads are reduced while frequency orthogonality of a plurality of receive ends is ensured, ensuring that data is successfully demodulated by the receive end.

In a possible implementation of the second aspect, the main symbol having the single subcarrier width includes a main symbol used for sending a reference signal and a main symbol used for sending data. In this implementation, the main symbol having the single subcarrier width may be the main symbol used for sending the reference signal, or may be the main symbol used for sending the data. In this embodiment of this application, the main symbol occupied by the reference signal when the single subcarrier width is used is split into the plurality of sub-symbols.

In a possible implementation of the second aspect, the sub-symbol used for sending the reference signal is predefined.

For example, the sub-symbol used for sending the reference signal may be a 1st sub-symbol. In this implementation, the receive end can quickly demodulate a channel.

For another example, the sub-symbol used for sending the reference signal may be a 2nd sub-symbol. In this implementation, extending a CP of the sub-symbol of the reference signal to a previous sub-symbol can improve an anti-multipath capability of the reference signal.

In a possible implementation of the second aspect, the sub-symbol used for sending the reference signal may be indicated by the network device, and this implementation can flexibly adapt to various scenarios.

In a possible implementation of the second aspect, a subcarrier width of each sub-symbol is N times a subcarrier width of the main symbol, or a subcarrier width of each sub-symbol is related to at least one of a subcarrier width of the main symbol, N, and a length of a cyclic prefix CP of the main symbol.

For example, when the subcarrier width of the main symbol is 15 kHz, and the subcarrier width of the sub-symbol is 30 kHz, the main symbol is split into two sub-symbols.

In a possible implementation of the second aspect, a length of each sub-symbol a CP is 1/N of a length of the main symbol excluding the CP, and the length of each sub-symbol excluding the CP is 1/N of the length of the main symbol excluding the CP. In this implementation, the length of each sub-symbol excluding the CP may be calculated by dividing the length of the main symbol excluding the CP by N, and the length of the CP of each sub-symbol may be calculated by dividing the length of the CP of the main symbol by N. The length of each sub-symbol calculated in this manner is the same. In other words, the length of the CP of the main symbol is evenly allocated to each sub-symbol.

In a possible implementation of the second aspect, a length of each sub-symbol excluding a CP is related to at least one of a length of the main symbol excluding the CP, the length of the CP of the main symbol, a length of a CP of each sub-symbol, and a quantity N of sub-symbols.

In a possible implementation of the second aspect, each sub-symbol has a same length of CP.

In a possible implementation of the second aspect, the length of the CP of each sub-symbol is equal to the length of the CP of the main symbol. In this implementation, it can be ensured that an anti-multipath capability of the sub-symbol is similar to an anti-multipath capability of the main symbol.

In a possible implementation of the second aspect, at least two of the N sub-symbols have different lengths of CPs.

In a possible implementation of the second aspect, a length of a CP of the sub-symbol used for sending a reference signal is greater than or equal to a length of a CP of the sub-symbol used for sending data signal. In this implementation, to adapt to various scenarios, the length of the CP of the sub-symbol may be randomly specified.

According to a third aspect, a communication apparatus is provided. The communication apparatus includes at least one processor and a memory. The processor is coupled to the memory, and the memory stores program instructions. When the program instructions stored in the memory are executed by the processor, the method according to any one of the first aspect or the possible implementations of the first aspect is performed.

According to a fourth aspect, a communication apparatus is provided. The communication apparatus includes at least one processor and an interface circuit. The at least one processor is configured to perform the method according to any one of the first aspect or the possible implementations of the first aspect.

According to a fifth aspect, a terminal device is provided. The terminal device includes the communication apparatus provided in the second aspect. Alternatively, the terminal device includes the communication apparatus provided in the third aspect. Alternatively, the terminal device includes the communication apparatus provided in the fourth aspect.

According to a sixth aspect, a network device is provided. The network device includes the communication apparatus provided in the second aspect. Alternatively, the network device includes the communication apparatus provided in the third aspect. Alternatively, the network device includes the communication apparatus provided in the fourth aspect.

According to a seventh aspect, a computer program product is provided. The computer program product includes a computer program. When the computer program is executed by a processor, the method according to any one of the first aspect or the possible implementations of the first aspect is performed.

According to an eighth aspect, a computer-readable storage medium is provided. The computer-readable storage medium stores a computer program. When the computer program is executed, the method according to any one of the first aspect or the possible implementations of the first aspect is performed.

According to a ninth aspect, a chip is provided. The chip includes a processor. The processor is configured to invoke a computer program from a memory and run the computer program, and a communication device in which the chip is installed is enabled to perform the method according to any one of the first aspect or the possible implementations of the first aspect.

According to a tenth aspect, a communication system is provided. The communication system includes the foregoing terminal device and the foregoing network device.

**BRIEF DESCRIPTION OF DRAWINGS**

FIG. 1 is a comparison diagram of time-frequency widths of one subcarrier (symbol) of OFDM in different numerologies;

FIG. 2 is a diagram of frame structures corresponding to different subcarrier widths;

FIG. 3 is a diagram of a symbol in time domain of after a CP is added;

FIG. 4 is a diagram of an OFDM symbol with an extended CP;

FIG. 5 is a diagram of an example in which a transmit end sends a downlink signal to a receive end according to an embodiment of this application;

FIG. 6 is a diagram of another example in which a transmit end sends a downlink signal to a receive end according to an embodiment of this application;

FIG. 7 is a diagram of sending a downlink signal by using both one subcarrier width and a plurality of subcarrier widths according to an embodiment of this application;

FIG. 8 is a diagram of an example of a communication system according to an embodiment of this application;

FIG. 9 is a diagram of another example of a communication system according to an embodiment of this application;

FIG. 10 is a diagram of still another example of a communication system according to an embodiment of this application;

FIG. 11 is a schematic flowchart of an example of a communication method 1100 according to an embodiment of this application;

FIG. 12 is a diagram of a network device sending a downlink signal to a first terminal device according to an embodiment of this application;

FIG. 13 is a diagram of an example of splitting based on a reference signal on a main symbol according to an embodiment of this application;

FIG. 14 is a diagram of another example of splitting based on a reference signal on a main symbol according to an embodiment of this application;

FIG. 15 is a diagram of still another example of splitting based on a reference signal on a main symbol according to an embodiment of this application;

FIG. 16 is a diagram of yet another example of splitting based on a reference signal on a main symbol according to an embodiment of this application;

FIG. 17 is a diagram of yet another example of splitting based on a reference signal on a main symbol according to an embodiment of this application;

FIG. 18 is a diagram of yet another example of splitting based on a reference signal on a main symbol according to an embodiment of this application;

FIG. 19 is a block diagram of a communication apparatus 1900 according to an embodiment of this application;

FIG. 20 is a block diagram of another example of a communication apparatus 2000 according to an embodiment of this application;

FIG. 21 is a diagram of a structure of a network device 2100 according to an embodiment of this application; and

FIG. 22 is a diagram of a chip system according to an embodiment of this application.

## DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5$^{th}$ generation (5$^{th}$ generation, 5G) system, or a future evolving communication (for example, 6G) system.

The terminal device in embodiments of this application may also be referred to as user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved network, or the like. This is not limited in this embodiment of this application.

A network device in embodiments of this application may be a device configured to communicate with the terminal device. The network device may be a base transceiver station (base transceiver station, BTS) in a global system for mobile communications (global system for mobile communications, GSM) or a code division multiple access (code division multiple access, CDMA) system. Alternatively, the network device may be a NodeB (NodeB, NB) in a wideband code division multiple access (wideband code division multiple access, WCDMA) system. Alternatively, the network device may be an evolved NodeB (evolved NodeB, eNB or eNodeB) in an LTE system. Alternatively, the network device may be a radio controller in a scenario of a cloud radio access network (cloud radio access network, CRAN). Alternatively, the network device may be a relay station, an access point, a vehicle-mounted device, a wearable device, a network device in 5G network, a network device in a future evolved network, or the like. This is not limited in this embodiment of this application.

In this embodiment of this application, the terminal device or the network device may include a hardware layer, and optionally, may further include a software layer running at the hardware layer. The hardware layer may include a processor, and may further include hardware such as a memory management unit (memory management unit, MMU) or a memory (also referred to as a main memory). The software layer stores computer instructions that facilitate implementation of the methods according to embodiments of this application. A specific structure or level of an execution body of the method provided in embodiments of this application is not particularly limited in embodiments of this application. As long as the execution body can communicate based on the method provided in embodiments of this application by running a program that records a code of the method provided in embodiments of this application, it can be considered as a terminal device or network device implementing embodiments of this application. For example, the execution body of the method provided in embodiments of this application may be a communication module (for example, a modem), a system on chip SoC, or another functional module in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk drive, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage medium described in this specification may represent one or more devices and/or another machine-readable medium that are configured to store information. The term "machine readable medium" may include but is not limited to a radio channel, and various another medium that can store, contain and/or carry an instruction and/or data.

In long term evolution LTE/long term evolution-advanced (LTE-advanced, LTE-A)/ NR systems defined in the 3rd generation partnership project (3rd Generation Partnership Project, 3GPP), orthogonal frequency division multiple access (orthogonal frequency division multiple access, OFDMA) is typically used for downlink multiple access. Downlink resources are divided into a plurality of orthogonal frequency division multiplexing (orthogonal frequency division multiplexing, OFDM) symbols in time (time domain) and a plurality of subcarriers in frequency (frequency domain).

Some downlink time-frequency resources are used for carrying a physical downlink control channel (physical downlink control channel, PDCCH). The PDCCH is used for carrying downlink control information (downlink control information, DCI). The DCI is control information used by the network device to indicate user equipment (user equipment, UE) behavior at a physical layer (Physical Layer). In addition, higher layer signaling may also be used by the network device to indicate UE behavior. The higher layer signaling is indication information, above the physical layer, that is used for controlling and managing related UE, for example, radio resource control (radio resource control, RRC) signaling. Some downlink time-frequency resources are used for carrying a physical downlink shared channel (physical downlink shared channel, PDSCH). The PDSCH is used for carrying data exchanged between the user equipment and the network device. The PDSCH is shared by all user equipment that access the network system.

In a time-frequency resource indication process, a granularity for representing a size of a system time domain resource is a slot (slot). For a slot based frame structure (slot based frame structure), each slot includes 14 symbols. For a non-slot based frame structure (non-slot based frame structure), each slot may include two, four, or seven symbols. In addition, it is further specified that a granularity for representing a size of a system frequency domain resource may be a resource block (resource block, RB). In some configuration cases, one RB includes 2 subcarriers, and bandwidth occupied by each subcarrier is 15 kHz. One or more symbols may be included in time domain. In this embodiment of this application, a symbol is also referred to as a time domain symbol, and may be an orthogonal frequency division multiplexing (orthogonal frequency division multiplexing, OFDM) symbol or a single carrier frequency division multiple access (single carrier frequency division multiple access, SC-FDMA) symbol. SC-FDMA is also referred to as orthogonal frequency division multiplexing with transform precoding (orthogonal frequency division multiplexing with transform precoding, OFDM with TP). It can be understood that, in embodiments of this application, the granularity representing a size of a system time domain resource is not limited to the slot, and may be alternatively a subframe (Subframe), a transmission time interval, a mini-slot (mini-Slot), or the like.

A 5G network has a large frequency band span, can be deployed flexibly, and has diversified service types. Therefore, a parameter set that can be flexibly extended is required. Numerology is a new concept introduced in 5G NR, and may be referred to as a parameter set. It mainly determines a frequency domain width (how many frequency domain bandwidths are occupied) and a time domain length (duration) of an OFDM subcarrier signal, and supports service types with a great difference in quality of service (Quality of Service, QoS) in a 5th generation (5th Generation, 5G) mobile communication technology system, for example, a massive machine type communication (Massive Machine Type Communication, mMTC) service, an ultra-reliable and low-latency communications (Ultra-Reliable and Low-Latency Communications, URLLC) service, an enhanced mobile broadband (Enhanced Mobile Broadband, eMBB) service, and a multimedia broadcast multicast service (Multimedia Broadcast Multicast Service, MBMS). To meet these differentiated requirements, the new radio (New Radio, NR) technology supports a plurality of numerologies. The following table is from 3GPP protocol TS 38.211.

Table 1<38.211-Table 4.2-1: Supported transmission numerologies>

| μ | Δf=2^μ·15 [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

As shown in Table 1, μ represents a numerology configuration index, and Δf represents a subcarrier spacing. It can be learned from Table 1 that in addition to a 15 kHz subcarrier spacing that exists in LTE, 30 kHz, 60 kHz, 120 kHz, and 240 kHz subcarrier spacings are additionally introduced in NR.

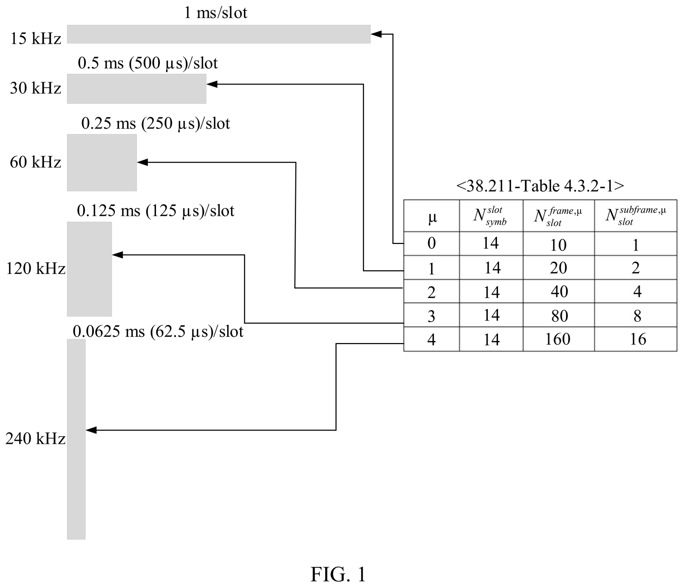

FIG. 1 is a comparison diagram of time-frequency widths of one subcarrier (symbol) of OFDM in different numerologies. A horizontal axis represents time domain duration, and a vertical axis represents a subcarrier spacing. As shown in FIG. 1, an NR system supports a plurality of subcarrier spacings. When subcarrier spacings are different, duration corresponding to a slot is different. For example, when the subcarrier spacing is 15 kHz, duration corresponding to a slot is 1 ms; when the subcarrier spacing is 30 kHz, duration corresponding to a slot is 0.5 ms; when the subcarrier spacing is 60 kHz, duration corresponding to a slot is 0.25 ms; and when the subcarrier spacing is 120 kHz, duration corresponding to a slot is 0.125 ms. Because a quantity of symbols in one slot is always 14 or 12, it may be understood that duration corresponding to one symbol also varies with the subcarrier spacing.

In a multicarrier system, a relationship between a symbol periodicity of a symbol and a subcarrier spacing is T=1/subcarrier width. Therefore, a larger subcarrier spacing indicates a shorter symbol periodicity. In a frame structure, 10 ms is used as a reference, and duration of 10 ms represents a length of a frame. One frame may be further divided into a plurality of slots, and each slot includes 14 OFDM symbols.

As shown in the table in FIG. 1, for different μ, duration of 10 ms (that is, one frame) is:

$$N_{slot}^{frame,\mu} \times N_{symb}^{slot} \qquad (1)$$

$N_{slot}^{frame,\mu}$ represents a quantity of slots included in each frame and exponentially extends with a parameter set.

$N_{symb}^{slot}$ represents a quantity of OFDM symbols in each slot, is 14 in a normal cyclic prefix, and is 12 in an extended cyclic prefix. $N_{slot}^{subframe,\mu}$ represents a quantity of slots in each subframe and exponentially extends with the parameter set.

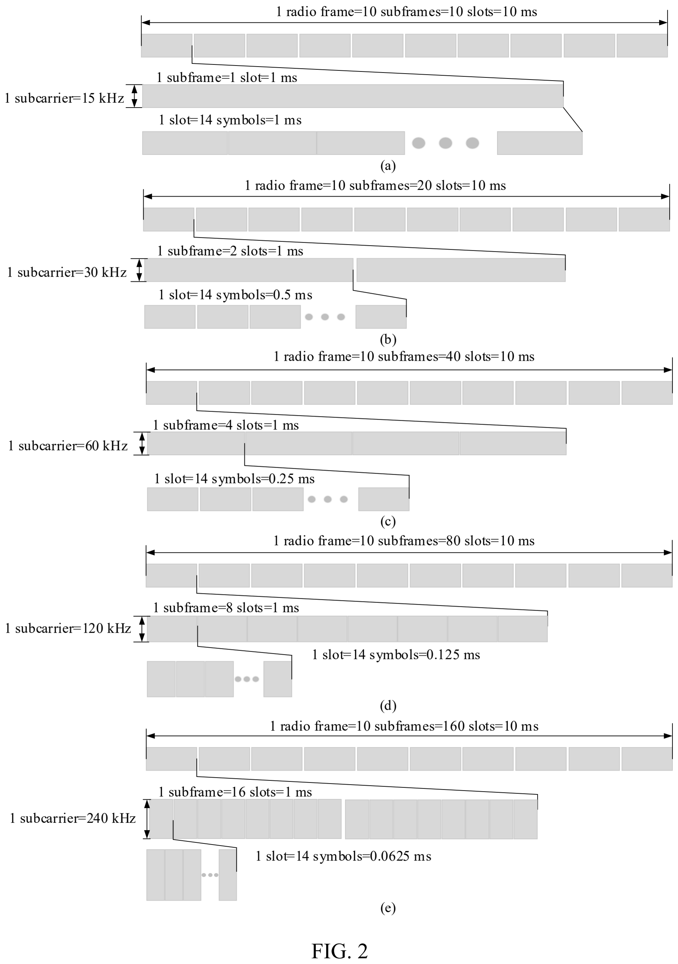

In an LTE system, one subframe has two slots. However, in an NR system, duration of a slot is subject to a subcarrier spacing, and a wider subcarrier spacing indicates shorter duration of the slot. FIG. 2 is a diagram of frame structures corresponding to different subcarrier widths. As shown in (a) in FIG. 2, when μ=0, a corresponding subcarrier width is 15 kHz, and duration corresponding to one slot is 1 ms. As shown in (b) in FIG. 2, when μ=1, a corresponding subcarrier width is 30 kHz, and duration corresponding to one slot is 0.5 ms. As shown in (c) in FIG. 2, when μ=2, a corresponding subcarrier width is 60 kHz, and duration corresponding to one slot is 0.25 ms. As shown in (d) in FIG. 2, when μ=3, a corresponding subcarrier width is 120 kHz, and duration corresponding to one slot is 0.125 ms. As shown in (e) in FIG. 2, when μ=4, a corresponding subcarrier width is 240 kHz, and duration corresponding to one slot is 0.0625 ms. Therefore, it can be learned from FIG. 2 that a wider subcarrier spacing indicates shorter duration of a slot in each subframe.

Selection of a subcarrier spacing is subject to multiple factors, including deployment mode (FDD or TDD), carrier frequency, service requirement (delay, reliability, and data rate), hardware quality (phase noise of a local crystal oscillator), mobility, and implementation complexity. For example, a larger subcarrier spacing is suitable for delay-sensitive services (URLLC), small-area coverage scenarios, high carrier frequency scenarios, and high-speed mobility scenarios, and a smaller subcarrier spacing is suitable for enhanced broadcast/multicast services (eMBMS), large-area coverage scenarios, low carrier frequency scenarios, low-speed mobility scenarios, and narrow-band devices.

For example, at a low frequency, a subcarrier width used when a network device sends a downlink signal is less than 60 kHz, because a longer cyclic prefix is required in a low frequency scenario to meet rich multipath spread. At a high frequency, a subcarrier width used when the network device sends a downlink signal is equal to 120 kHz or 240 kHz. This is because a large subcarrier width in a high frequency scenario is more conducive to resisting a nonlinear ideal factor caused by phase noise, and beam deforming (beamforming) is performed in the high frequency scenario. Therefore, channel multipath spread at the high frequency is small, and an excessively long CP is not required, suitable for data transmission with a high throughput.

In addition, a reference of a sampling rate is defined as $T_c = 1/(4096 \times 480 \times 10^3)$ in NR. In the protocol, duration is described by using the sampling rate as the reference. For example, in the protocol, duration of a common OFDM symbol is defined as $N_u^\mu = 2048K \times 2^{-\mu}$, where k=64, and N represents duration of N pieces of $T_c$, that is, a symbol periodicity of one OFDM symbol is $N_u^\mu$ $T_c$ seconds.

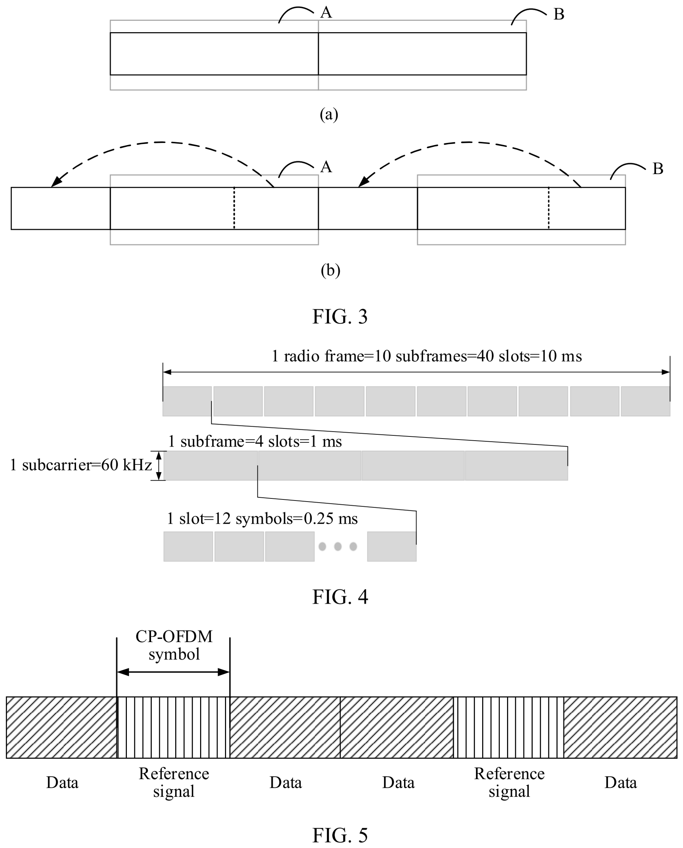

The OFDM system is described above, and the cyclic prefix (Cyclic Prefix, CP) is described below. The CP is used for resisting interference between adjacent symbols (inter-symbol interference) caused by multipath effect. FIG. 3 is a diagram of a symbol in time domain after a CP insertion. As shown in (a) in FIG. 3, there are two OFDM symbols A and B. In an ideal case, data is normally transmitted on the symbol A and the symbol B. However, if the symbol A is slightly delayed, the end part of the symbol A overflows to the symbol B. In this case, a time interval may be set before the symbol A and the symbol B. In this way, even if one symbol is delayed, the symbol does not overflow to a next symbol. A common way is to copy a part of the signal from the end of the symbol and paste the part to the interval. The copied part with a prefix at the beginning is referred to as a "cyclic prefix". For example, as shown in (b) in FIG. 3, a part of a signal is copied from the end of a symbol A and pasted at the beginning of a symbol A, and a part of a signal is copied from the end of a symbol B and pasted at the beginning of the symbol B. When the symbol A is slightly delayed, the end part of the symbol A does not affect the symbol B, thereby avoiding mutual interference between the symbol A and the symbol B.

When a CP is set for each OFDM symbol, the periodicity of each OFDM symbol changes from T=1/subcarrier width to T+Tcp=1/subcarrier width. A normal CP scheme defined in the protocol is shown in the following table.

Table 2 Relationship between a numerology, a CP, and a periodicity of an OFDM symbol

| Parameter/Numerology ($\mu$) | 0 | 1 | 2 | 3 | 4 |
|---|---|---|---|---|---|
| Subcarrier spacing (kHz) | 15 | 30 | 60 | 120 | 240 |
| OFDM symbol duration ($\mu$s) | 66.67 | 33.33 | 16.67 | 8.33 | 4.17 |
| Corresponding cyclic prefix ($\mu$s) | 4.69 | 2.34 | 1.17 | 0.57 | 0.29 |
| Cyclic prefix+Symbol duration ($\mu$s) | 71.35 | 35.68 | 17.84 | 8.92 | 4.46 |

As shown in Table 2, as the subcarrier spacing becomes larger, both the symbol duration and the CP length decrease proportionally. A reason for the proportional decrease is that an application scenario corresponding to the numerology is considered during protocol design. A length of the CP can meet a maximum multipath delay spread in this scenario. However, there is still a possibility that a normal length of the CP used in Table 2 cannot meet a system requirement. Therefore, a length of a CP for a subcarrier width=60 kHz is additionally defined in the NR protocol, named as an extended CP. This mode is mainly used for a URLLC scenario. The extended CP ensures that a CP is large enough to meet multipath delay spread. In addition, it is considered that fast signal processing needs to be ensured in the URLLC scenario. Therefore, more time may be reserved, by using a large enough CP, for baseband signal processing.

Currently, an NR system supports scheduling of various time units, and a length of a time unit may be one or more time domain symbols. For a slot format of a normal cyclic prefix (normal cyclic prefix, NCP), one slot includes 14 symbols. For a slot format of an extended cyclic prefix (extended cyclic prefix, ECP), one slot includes 12 symbols. FIG. 4 is a diagram of an OFDM symbol with an extended CP. As shown in FIG. 4, one slot of the extended CP includes 12 symbols.

Descriptions in the protocol from the perspective of a formula are as follows: A length of an OFDM symbol excluding a CP is denoted as $N_u^\mu$, and a length of the CP is $N_{CP,l}^\mu$, where $l \in \left\{0,1,...,N_{slot}^{subframe,\mu} N_{symb}^{slot} - 1\right\}$ represents an index number of the symbol in a subframe. Duration of the CP and duration of the OFDM symbol can be obtained as follows (from the protocol TS 38.211):

$$N_u^\mu = 2048\kappa \cdot 2^{-\mu}$$

$$N_{CP,l}^\mu = \begin{cases} 512\kappa \cdot 2^{-\mu} & \text{extended cyclic prefix} \\ 144\kappa \cdot 2^{-\mu} + 16\kappa & \text{normal cyclic prefix, } l = 0 \text{ or } l = 7 \cdot 2^\mu \\ 144\kappa \cdot 2^{-\mu} & \text{normal cyclic prefix, } l \neq 0 \text{ and } l \neq 7 \cdot 2^\mu \end{cases} \quad (2)$$

As mentioned above, a unit of the duration in the foregoing formula is $T_c = 1/(4096 \cdot 480 \cdot 10^3)$ second, and $\kappa=64$.

Based on the foregoing descriptions, OFDM and CP-OFDM are specifically described. The following specifically describes how a transmit end transmits a downlink signal to a receive end by using an OFDM technology.

The transmit end may be a network device, a terminal device, a satellite, or the like. Alternatively, the receive end may be a network device, a terminal device, a satellite, or the like. A transmit-end device and a receive end device of a signal are not limited in embodiments of this application.

In a possible implementation, to track a high-speed channel changing with time, the transmit end may increase density of reference signals in time domain. In other words, the transmit end sends a plurality of reference signals to the receive end, so that the high-speed channel changing with time is tracked based on the plurality of reference signals.

For example, FIG. 5 is a diagram of an example in which a transmit end sends a downlink signal to a receive end according to an embodiment of this application. The downlink signal includes a reference signal and data. As shown in FIG. 5, the transmit end sends the reference signal by using a plurality of CP-OFDM symbols. Each CP-OFDM symbol has a same subcarrier width. Then, the receive end may estimate a channel at a reference signal based on the received reference signal, and then obtain, by performing interpolation in time domain, a channel of a CP-OFDM symbol by using which the transmit end sends data, to demodulate the data. It can be learned from FIG. 5 that an entire CP-OFDM symbol is required for sending each reference signal. Therefore, large overheads are caused for sending a plurality of reference signals.

In another implementation, in a related technology, a subcarrier width of the CP-OFDM for sending the reference signal may be increased, to reduce duration of the CP-OFDM for sending the reference signal, thereby reducing overheads.

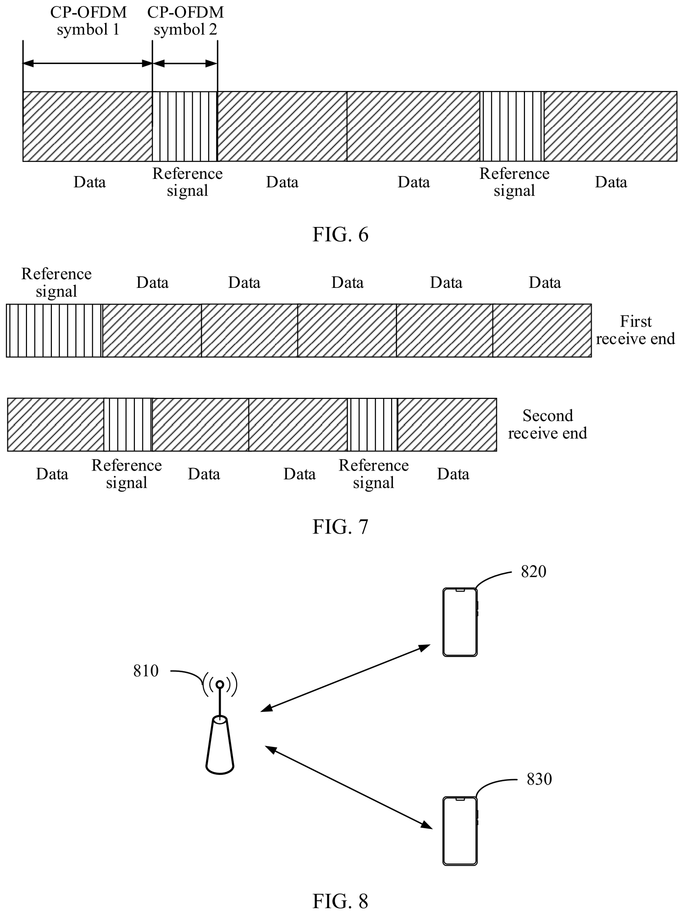

For example, FIG. 6 is a diagram of another example in which a transmit end sends a downlink signal to a receive end according to an embodiment of this application. As shown in FIG. 6, the downlink signal may be a reference signal or data. As shown in FIG. 6, because a subcarrier width of a CP-OFDM symbol 2 in which the reference signal is located is larger than a subcarrier width of a CP-OFDM symbol 1 in which data is located, duration of the CP-OFDM symbol 2 is shorter than duration of the CP-OFDM symbol 1. Therefore, compared with the implementation in FIG. 5, in this implementation, although the reference signal is sent by using an entire CP-OFDM symbol, overheads are smaller.

In the first manner, a downlink signal is sent by using a single subcarrier width, and in the second manner, a downlink signal is sent by using a plurality of subcarrier widths. Therefore, when the transmit end simultaneously sends the downlink signal to a plurality of receive ends in the first manner and the second manner, symbol time alignment cannot be implemented between a large quantity of CP-OFDM symbols. When the CP-OFDM cannot be aligned, the following two problems are caused.

First, frequency orthogonality cannot be achieved by a first receive end and a second receive end, and a guard bandwidth needs to be reserved to avoid interference between users. If the guard bandwidth is not reserved, signal reception of the first receive end and the second receive end is interfered, and finally, demodulation performance of the receive end is lost, and data cannot be normally demodulated.

In addition, when the CP-OFDM cannot be aligned, complexity of sending downlink data by the transmit end increases. Processing needs to be separately performed for different receive ends. Time domain transmitted signals are generated respectively, and then are superimposed together for sending. This is different from the first manner in which data of different receive ends may be mapped at different frequency domain subcarriers, and a final time domain transmitted signal is generated through one inverse Fourier transform.

For example, FIG. 7 is a diagram of sending a downlink signal by using both a single subcarrier width and a plurality of subcarrier widths according to an embodiment of this application. As shown in FIG. 7, a transmit end sends a reference signal and data to a first receive end by using a same subcarrier width, and the transmit end sends a reference signal and data to a second receive end by using different subcarrier widths. In this case, alignment between the first receive end and the second receive end cannot be achieved on CP-OFDM other than 1st CP-OFDM. To be specific, difficulty in sending the downlink signal to the first receive end and the second receive end by the transmit end is increased, and a data demodulation failure may occur on the first receive end and the second receive end.

It can be learned that how to reduce overheads while CP-OFDM symbols of a plurality of receive ends are aligned is a problem that needs to be resolved.

In view of this, this application provides a communication method. The method includes: A transmit end determines a position of a main symbol occupied by a reference signal when a single subcarrier width is used, and then splits the main symbol for sending the reference signal into a plurality of sub-symbols. A part of the plurality of sub-symbols are used for sending the reference signal, and a part of the plurality of sub-symbols are used for sending data. According to the method provided in this application, overheads can be reduced while alignment between CP-OFDM symbols of a plurality of receive ends is ensured.

For ease of understanding embodiments of this application, a communication system applicable to embodiments of this application is first described with reference to FIG. 8.

FIG. 8 is a diagram of an example of a communication system according to an embodiment of this application. As shown in FIG. 8, the communication system includes three communication devices, for example, a network device 810, a terminal device 820, and a terminal device 830. Data communication may be performed between the network device 810 and at least one of the terminal device 820 and the terminal device 830. For example, the network device 810 may perform downlink signal transmission with the terminal device 820 or the terminal device 830 by using the communication method provided in this application. Certainly, the terminal device 820 or the terminal device 830 may alternatively perform uplink signal transmission with the network device 810 by using the communication method provided in this application.

It should be understood that the communication system shown in FIG. 8 may further include more network nodes, for example, terminal devices or network devices. The network devices or the terminal devices included in the communication system shown in FIG. 8 may be the network devices or the terminal devices in the foregoing various forms. Details are not shown one by one in the figure in this embodiment of this application.

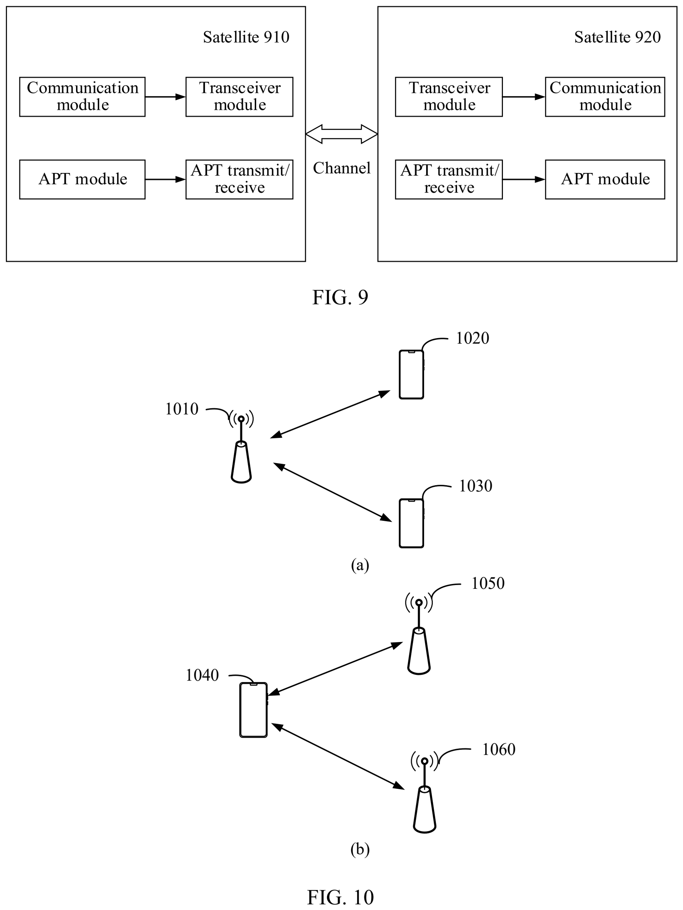

FIG. 9 is a diagram of another example of a communication system according to an embodiment of this application. As shown in FIG. 9, the communication system includes two satellites, for example, a satellite 910 and a satellite 920. The satellite 910 and the satellite 920 each include an acquiring, pointing, and tracking (Acquiring, pointing, and tracking, APT) module and a communication module. The communication module is responsible for inter-satellite information transmission and is a main body of an inter-satellite communication system. The APT module is responsible for acquiring, pointing, and tracking between satellites. Determining an incoming direction of an incident signal means acquiring, adjusting a transmit wave to aim at a reception direction means pointing, and continuous adjustment of pointing and acquiring throughout an entire communication process means tracking. The satellite 910 may perform information transmission with the satellite 920 by using the communication method provided in this application.

FIG. 10 is a diagram of still another example of a communication system according to an embodiment of this application. As shown in (a) in FIG. 10, the cellular communication system or the wireless local area network communication system includes a network device 1010, a terminal device 1020, and a terminal device 1030. To be specific, one network device may perform signal transmission with a plurality of terminals by using the communication method provided in this application. As shown in (b) in FIG. 10, the cellular communication system or the wireless local area network communication system includes a terminal device 1040, a network device 1050, and a network device 1060. To be specific, one terminal device may perform signal transmission with a plurality of network devices by using the communication method provided in this application.

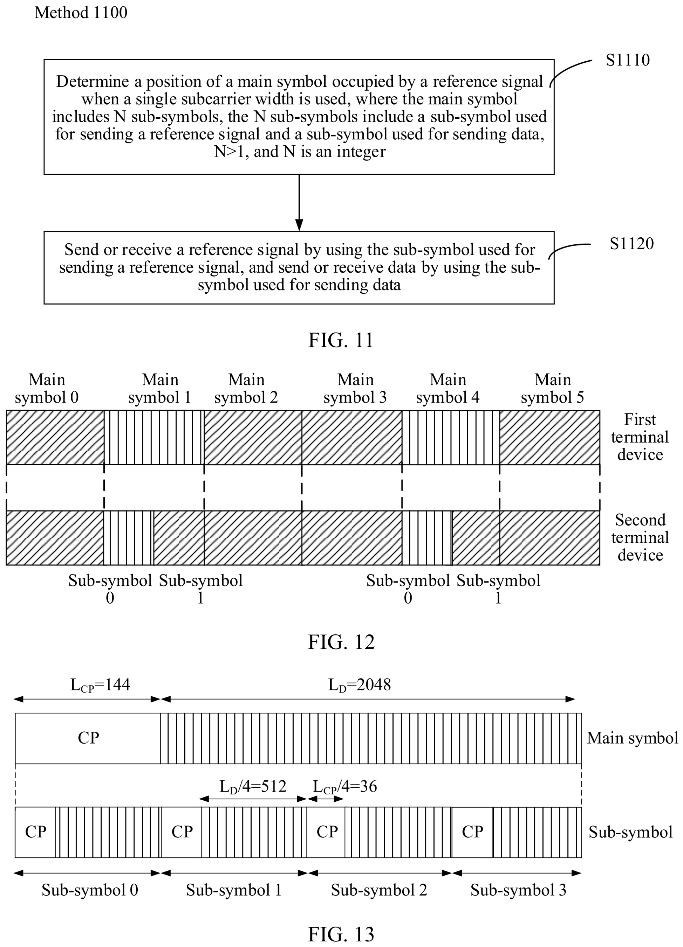

The following describes in detail a communication method provided in this application with reference to FIG. 11. FIG. 11 is a schematic flowchart of an example of a communication method 1100 according to an embodiment of this application. The method 1100 may be applied to the scenario shown in FIG. 8, FIG. 9, or FIG. 10, and certainly may be applied to another communication scenario. This is not limited in this embodiment of this application.

It should be further understood that, in this embodiment of this application, the method is described by using an example in which the method is performed by a terminal device and a network device. By way of example, and not limitation, the method may alternatively be performed by chips, chip systems, processors, or the like used in the terminal device and the network device. The following describes the communication method provided in this embodiment of this application by using an example in which a transmit end is the network device and a receive end is the terminal device.

As shown in FIG. 11, the method 1100 shown in FIG. 11 may include S1110 and S1120. The following describes in detail the steps in the method 1100 with reference to FIG. 11.

S1110: The network device determines a position of a main symbol occupied by a reference signal when a single subcarrier width is used, where the main symbol includes N sub-symbols, the N sub-symbols include a sub-symbol used for sending a reference signal and a sub-symbol used for sending data, N>1, and N is an integer.

In some embodiments, the network device sends a downlink signal to a first terminal device by using a CP-OFDM symbol having a single subcarrier width. In this case, the CP-OFDM symbol may be referred to as a main symbol.

It should be understood that the downlink signal includes a reference signal and data. In other words, in this embodiment of this application, the main symbol having the single subcarrier width includes a main symbol used for sending a reference signal, and further includes a main symbol used for sending data.

It should be noted that the network device does not specifically define a CP-OFDM symbol on which the reference signal and the data are sent.

It should be further noted that the subcarrier width may be but is not limited to any one of 15 kHz, 30 kHz, 60 kHz, 120 kHz, and 240 kHz. This is not limited in this embodiment of this application.

To reduce overheads of sending the reference signal, the network device may indicate, based on the position of the main symbol, a specific position of the main symbol on which the reference signal is located.

For example, FIG. 12 is a diagram of a network device sending a downlink signal to a first terminal device according to an embodiment of this application. As shown in FIG. 12, the network device sends the downlink signal to the first terminal device by using six CP-OFDM symbols having a same subcarrier width. In this case, the six CP-OFDM symbols are referred to as main symbols, that is, the six CP-OFDM symbols are respectively a main symbol 0, a main symbol 1, a main symbol 2, a main symbol 3, a main symbol 4, and a main symbol 5.

In a possible implementation, the network device may indicate any one or more of the six CP-OFDM symbols used for sending the reference signal. For example, as shown in FIG. 12, the network device may indicate that the main symbol 1 is a position of the main symbol on which the reference signal is located, and the main symbol 4 is a position of the main symbol on which the reference signal is located.

In this embodiment of this application, to ensure that CP-OFDM symbols are aligned when the network device sends the downlink signal to the first terminal device and a second terminal device, a position of a main symbol on which the network device sends the reference signal to the second terminal device is determined based on a position of a main symbol on which the network device sends the reference signal to the first terminal device.

For example, when the main symbol 1 is the position at which the network device sends the reference signal to the first terminal device, the network device may indicate that the main symbol 1 is the position of the main symbol on which the reference signal is located when the network device sends the downlink signal to the second terminal device. When the main symbol 4 is the position at which the network device sends the reference signal to the first terminal device, the network device may indicate that the main symbol 4 is the position of the main symbol on which the reference signal is located when the network device sends the downlink signal to the second terminal device.

In this embodiment of this application, to reduce overheads and avoid a waste of communication resources, after the position of the main symbol on which the reference signal is sent to the second terminal device is determined, the main symbol may be split into N sub-symbols. N>1, N is an integer, and the N sub-symbols include a sub-symbol used for sending the reference signal and a sub-symbol used for sending the data.

In some embodiments, the main symbol on which the reference signal is located may be split into N sub-symbols by increasing a subcarrier width. In other words, a value of N is related to a subcarrier width of the main symbol. When the subcarrier width of the main symbol is $\Delta f$, a subcarrier width of the sub-symbol is $\Delta f \times N$.

For example, when a subcarrier width of the main symbol 1 on which the reference signal is located is 15 kHz, the subcarrier width of the main symbol 1 may be increased to 30 kHz, indicating that the main symbol 1 may be split into two sub-symbols; or the subcarrier width of the main symbol 1 may be increased to 60 kHz, indicating that the main symbol 1 may be split into four sub-symbols; or the subcarrier width of the main symbol 1 may be increased to 120 kHz, indicating that the main symbol 1 may be split into eight sub-symbols.

For another example, when a subcarrier width of the main symbol 1 on which the reference signal is located is 30 kHz, the subcarrier width of the main symbol 1 may be increased to 60 kHz, indicating that the main symbol 1 may be split into two sub-symbols; or the subcarrier width of the main symbol 1 may be increased to 120 kHz, indicating that the main symbol 1 may be split into four sub-symbols.

For example, still with reference to FIG. 12, the main symbol 1 may be split into two sub-symbols by increasing the subcarrier width of the main symbol 1. The two sub-symbols are respectively a sub-symbol 0 and a sub-symbol 1. The main symbol 4 may be split into two sub-symbols by increasing a subcarrier width of the main symbol 4. The two sub-symbols are respectively a sub-symbol 0 and a sub-symbol 1.

In some possible implementations, a position of the sub-symbol used for sending a reference signal or a position of the sub-symbol used for sending a data signal is predefined.

For example, the sub-symbol used for sending the reference signal may be a 1st sub-symbol. In this implementation, after receiving the reference signal, the second terminal device can quickly demodulate a channel.

For another example, the sub-symbol used for sending the data may be a 1st sub-symbol, and the sub-symbol used for sending the reference signal may be a 2nd sub-symbol. In this implementation, when the data is sent on the 1st sub-symbol, a CP of the sub-symbol of the reference signal may be extended to a previous sub-symbol, so that an anti-multipath capability of the reference signal can be improved.

In some other possible implementations, the position of the sub-symbol used for sending a reference signal or the position of the sub-symbol used for sending the data signal may be indicated by the network device. This implementation may flexibly adapt to various scenarios.

The following specifically describes determining of a length of a CP of each sub-symbol and a length of each sub-symbol excluding the CP after the main symbol is split into a plurality of sub-symbols.

In some embodiments, the length of each sub-symbol excluding the CP is 1/N of a length of the main symbol excluding a CP.

For example, the length of the main symbol excluding the CP is $L_D$, and the length of the sub-symbol excluding the CP may be $L_D/N$. In this implementation, N is exactly divisible by $L_D$. For example, $L_D=2^M$, $N=2^m$, and $m \leq M$.

In a possible implementation, lengths of CPs of the sub-symbols may be the same.

Optionally, the length of the CP of each sub-symbol is 1/N of the length of the CP of the main symbol.

For example, when the length of the CP of the main symbol is $L_{CP}$, the length of the CP of each sub-symbol is 1/N of the length of the main symbol excluding the CP. In this implementation, a sum of the lengths of the CPs of all the sub-symbols may be equal to the length of the CP of the main symbol, to ensure that total duration of the main symbol is the same as total duration of all the corresponding sub-symbols.

For example, FIG. 13 is a diagram of an example of splitting based on a reference signal on a main symbol according to an embodiment of this application. As shown in FIG. 13, when $L_{CP}$ is 144, $L_D$ is 2048, and N is 4, a length of a sub-symbol excluding a CP may be 2048/4=512, and a length of the CP of each sub-symbol is 144/4=36.

In another possible implementation, at least two of the N sub-symbols have different lengths of CPs.

Optionally, a length of a CP of the sub-symbol used for sending the reference signal is greater than a length of a CP of a sub-symbol other than the sub-symbol used for sending the reference signal in the N sub-symbols. In this implementation, to adapt to various scenarios, the length of the CP of the sub-symbol may be randomly specified.

For example, the network device may specify a length of a CP of a specific sub-symbol, and the length of the CP of the sub-symbol may be longer than that of another sub-symbol.

The specific sub-symbol may be any one or more of the plurality of sub-symbols. This is not limited in this embodiment of this application. For example, the specific sub-symbol may be a 1st sub-symbol, an Nth sub-symbol, or the like, or may be first n sub-symbols of the reference signals, last n sub-symbols of the reference signals, or the like.

In other words, the N sub-symbols include a sub-symbol with a first length and a sub-symbol with a second length. The sub-symbol with the first length may be understood as a specific sub-symbol, and the sub-symbol with the second length may be understood as a non-specific sub-symbol.

In addition, when a quantity of sub-symbols with the first length is n, where n≥1, and n is an integer, a length of a CP of the sub-symbol with the first length satisfies the following formula:

$$L_1 = \left[ L_{CP} - [\tfrac{L_{cp}}{N}] \times (N - n) \right]/n \qquad (3)$$

$L_1$ represents the length of the CP of the sub-symbol with the first length, $L_{CP}$ represents the length of the CP of the main symbol, N represents the quantity of sub-symbols, and n represents the quantity of sub-symbols with the first length.

A length of a CP of the sub-symbol with the second length satisfies the following formula:

$$L_2 = \left\lfloor \frac{L_{cp}}{N} \right\rfloor \qquad (4)$$

$L_2$ represents the length of the CP of the sub-symbol with the second length.

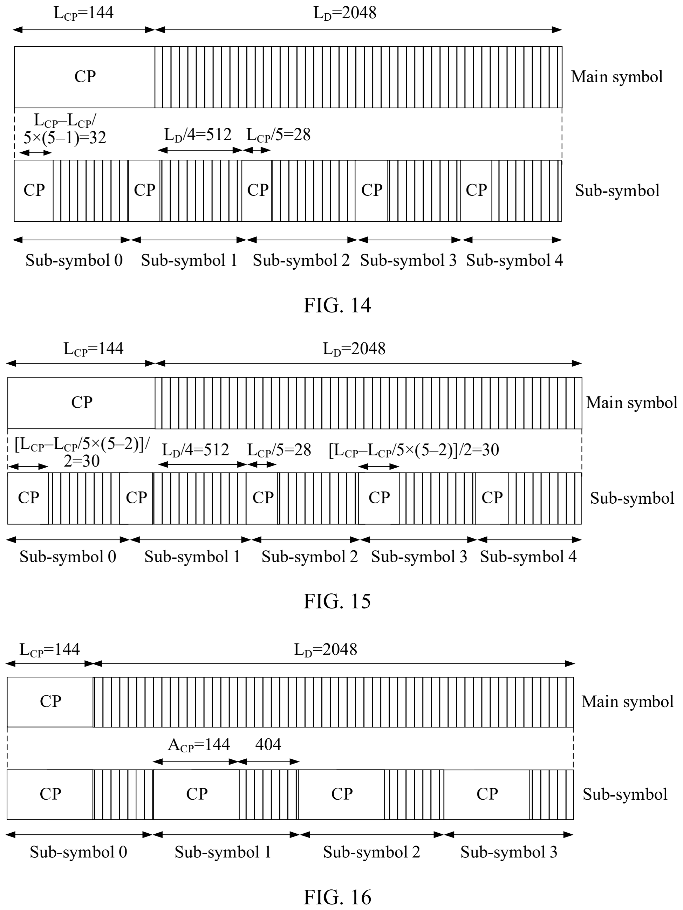

For example, FIG. 14 is a diagram of another example of splitting based on a reference signal on a main symbol according to an embodiment of this application. As shown in FIG. 14, when $L_{CP}$ is 144, $L_D$ is 2048, N is 5, and a quantity of specific sub-symbols is 1, n=1, and it may be obtained through calculation that the length of the CP of the sub-symbol with the second length is 28, and the length of the CP of the sub-symbol with the first length is 32.

In some other possible implementations, when there are a plurality of specific sub-symbols, n is a maximum integer that makes $\left[ L_{CP} - [\tfrac{L_{cp}}{N}] * (N - n) \right]/n$ divisible by n. In this implementation, a quantity of specific sub-symbols is maximized as much as possible, and lengths of CPs of specific sub-symbols are kept the same.

For example, FIG. 15 is a diagram of still another example of splitting based on a reference signal on a main symbol according to an embodiment of this application. As shown in FIG. 15, when $L_{CP}$ is 144, and N is 5, a length of a CP of a non-specific sub-symbol is 28, a length of a specific sub-symbol is 30, and a value of n may be 2. In this case, there may be two specific sub-symbols, and lengths of CPs of the two specific sub-symbols are the same, that is, 30.

In the foregoing implementation, a value of N is related to a subcarrier width. The length of each sub-symbol excluding the CP is determined based on the value of N and the length of the main symbol excluding the CP, and then the length of the CP of each sub-symbol is adjusted, to ensure that total duration of the main symbol is the same as total duration of all corresponding sub-symbols.

In some other embodiments, a subcarrier width of each sub-symbol is related to at least one of a subcarrier width of the main symbol, N, and a length of a CP of the main symbol.

For example, the subcarrier width of the sub-symbol may be calculated by using the following formula:

$$\Delta f \times \frac{L_D \times N}{L_D + L_{CP} - N \times A_{CP}} \qquad (5)$$

$\Delta f$ represents the subcarrier width of the main symbol, $L_D$ represents the length of the main symbol excluding the CP, $L_{CP}$ represents the length of the CP of the main symbol, N represents the quantity of sub-symbols, and $A_{CP}$ represents the length of the CP of each sub-symbol.

In a possible implementation, a length of each sub-symbol excluding a CP is related to at least one of a length of the main symbol excluding the CP, the length of the CP of the main symbol, a length of a CP of each sub-symbol, and the quantity N of sub-symbols.

Optionally, the length of each sub-symbol excluding the CP, the length of the main symbol excluding the CP, the length of the CP of the main symbol, the length of the CP of the sub-symbol, and the quantity N of sub-symbols may satisfy the following formula:

$$A = \frac{L_D + L_{CP} - N \times A_{CP}}{N} \qquad (6)$$

A represents the length of each sub-symbol excluding the CP, $L_D$ represents the length of the main symbol excluding the CP, $L_{CP}$ represents the length of the CP of the main symbol, N represents the quantity of sub-symbols, and $A_{CP}$ represents the length of the CP of each sub-symbol.

Optionally, in the foregoing formula (6), $A_{CP}$ may enable $(L_D + L_{CP} - N \times A_{CP})/N$ to be an integer.

Optionally, in the foregoing formula (6), lengths of CPs of the sub-symbols may be equal.

In a possible implementation, to ensure anti-multipath capabilities of the sub-symbol and the main symbol, $A_{CP}$ may be equal to $L_{CP}$ of the main symbol. In this implementation, $(L_D + L_{CP} - N \times A_{CP})/N$ may not be an integer.

For example, FIG. 16 is a diagram of yet another example of splitting based on a reference signal on a main symbol according to an embodiment of this application. As shown in FIG. 16, a length of a CP of the main symbol is 144, and a length of the main symbol excluding a CP is 2048. When N is 4, a length of a CP of a sub-symbol is 144, and a length of the sub-symbol excluding the CP is $(2048 + 144 - 4 \times 144)/4 = 404$.

In another possible implementation, at least two of the N sub-symbols have different lengths of CPs.

Optionally, a length of a CP of the sub-symbol used for sending the reference signal is greater than a length of a CP of a sub-symbol other than the sub-symbol used for sending the reference signal in the N sub-symbols. In this implementation, to adapt to various scenarios, the length of the CP of the sub-symbol may be randomly specified.

For example, the network device may specify a length of a CP of a specific sub-symbol for sending the reference signal, and the length of the CP of the sub-symbol may be longer than that of another sub-symbol.

For another example, the network device may specify that a length of a CP of the sub-symbol used for sending a reference signal is greater than or equal to a length of a CP of the sub-symbol used for sending data signal.

The specific sub-symbol may be any one or more of the plurality of sub-symbols. This is not limited in this embodiment of this application. For example, the specific sub-symbol may be a 1st sub-symbol, an Nth sub-symbol, or the like, or may be first n sub-symbols of the reference signals, last n sub-symbols of the reference signals, or the like.

In other words, the N sub-symbols include a sub-symbol with a first length and a sub-symbol with a second length. The sub-symbol with the first length may be understood as a specific sub-symbol, and the sub-symbol with the second length may be understood as a non-specific sub-symbol.

In addition, when a quantity of sub-symbols with the first length is n, where n≥1, and n is an integer, a length of a CP of the sub-symbol with the first length satisfies the following formula:

$$L_1 = \left[ K_{CP} - \left[ \frac{K_{CP}}{N} \right] \times (N - n) \right] / n \qquad (7)$$

$L_1$ represents the length of the CP of each sub-symbol with the first length, $K_{CP}$ represents a total length of CPs of sub-symbols, N represents the quantity of sub-symbols, and n represents the quantity of sub-symbols with the first length.

A length of a CP of the sub-symbol with the second length satisfies the following formula:

$$L_2 = \left\lfloor \frac{K_{CP}}{N} \right\rfloor \qquad (8)$$

$L_2$ represents the length of the CP of the sub-symbol with the second length.

When the length of the sub-symbol excluding the CP is A, a total length of CPs of the remaining sub-symbols that can be allocated is $K_{CP} = L_D + L_{CP} - N \times A$.

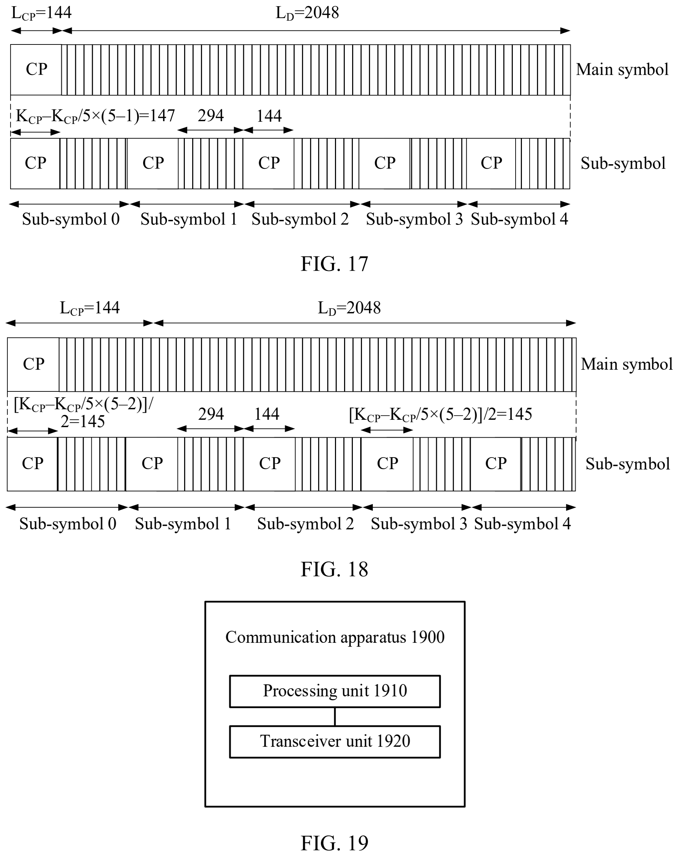

For example, FIG. 17 is a diagram of yet another example of splitting based on a reference signal on a main symbol according to an embodiment of this application. As shown in FIG. 17, when $L_{CP}$ is 144, $L_D$ is 2048, N is 5, and a quantity of specific sub-symbols is 1, a length A of a sub-symbol excluding a CP may be $(2048 + 144 - 5 \times 144)/5 = 294$, $K_{CP} = 2048 + 144 - 5 \times 294 = 722$, a length of a CP of a non-specific sub-symbol is $K_{CP}/5 = 144$, and a length of a CP of a specific sub-symbol is 147.

In some other possible implementations, when there are a plurality of specific sub-symbols, n is a maximum integer that makes $\left[ K_{CP} - \left[ \frac{K_{CP}}{N} \right] * (N - n) \right] / n$ divisible by n. In this implementation, a quantity of specific sub-symbols is maximized as much as possible, and lengths of CPs of the specific sub-symbols are kept the same.

For another example, FIG. 18 is a diagram of yet another example of splitting based on a reference signal on a main symbol according to an embodiment of this application. As shown in FIG. 18, when $L_{CP}$ is 144, and N is 5, a length of a CP of a non-specific sub-symbol is 144, a length of a specific sub-symbol is 145, and a value of n may be 2. In this case, there may be two specific sub-symbols, and lengths of CPs of the two specific sub-symbols are the same, that is, 145.

S1120: The network device or the terminal device sends or receives a reference signal by using the sub-symbol used for sending a reference signal, and sends or receives data by using the sub-symbol used for sending data.

In this embodiment of this application, the network device may send a reference signal by using the sub-symbol used for sending a reference signal, and send data by using the sub-symbol used for sending data.

Alternatively, the terminal device may receive a reference signal by using the sub-symbol used for sending a reference signal, and receive data by using the sub-symbol used for sending data.

According to the communication method provided in this embodiment of this application, the main symbol is split into the plurality of sub-symbols based on the position of the main symbol occupied by the reference signal when the single subcarrier width is used. A part of the plurality of sub-symbols are used for sending or receiving the reference signal, and a part of the plurality of sub-symbols are used for sending or receiving the data. This reduces overheads of sending the reference signal while alignment between the plurality of main symbols is ensured. In other words, the overheads are reduced while frequency orthogonality of a plurality of receive ends is ensured, ensuring that data is successfully demodulated by the receive end.

It should be understood that division into manners, cases, categories, and embodiments in embodiments of this application is merely for ease of description, and should not constitute a special limitation. Features in various manners, categories, cases, and embodiments may be combined without contradiction.

It should be further understood that, the foregoing descriptions are merely intended to help a person skilled in the art better understand embodiments of this application, instead of limiting the scope of embodiments of this application. It is clear that a person skilled in the art may make various equivalent modifications or changes based on the foregoing examples. For example, some steps may be unnecessary, or some steps may be newly added. Alternatively, any two or more of the foregoing embodiments are combined. A modified, changed, or combined solution also falls within the scope of embodiments of this application.

It should be further understood that the foregoing descriptions of embodiments of this application emphasize differences between embodiments. For same or similar parts that are not mentioned, refer to each other. For brevity, details are not described herein again.

It should be further understood that sequence numbers of the foregoing processes do not mean a sequence of execution. The sequence of execution of the processes should be determined according to functions and internal logic of the processes, and should not constitute any limitation on an implementation process of embodiments of this application.

It should be further understood that, in embodiments of this application, "presetting" and "predefining" may be implemented by prestoring corresponding code or a corresponding table on a device (for example, including the terminal device and the network device), or in another manner that may be used to indicate related information. A specific implementation thereof is not limited in this application.

It should be further understood that in embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

The foregoing describes in detail examples of the communication methods provided in this application. It may be understood that, to implement the foregoing functions, the terminal device and the network device include corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

The following describes a communication apparatus according to this application.

For example, FIG. 19 is a block diagram of a communication apparatus 1900 according to an embodiment of this application. The communication apparatus 1900 may correspond to the network device described in embodiments of the method 1100, or may be a chip or a component used in the network device. In addition, modules or units in the communication apparatus 1900 are separately configured to perform actions or processing processes performed by the network device described in embodiments of the method 1100.

As shown in FIG. 19, a communication apparatus 1900 includes a processing unit 1910 and a transceiver unit 1920. The transceiver unit 1920 is configured to send or receive a specific signal under driving of the processing unit 1910.

In some embodiments, the processing unit 1910 is configured to determine a position of a main symbol occupied by a reference signal when a single subcarrier width is used, the main symbol includes N sub-symbols, the N sub-symbols include a sub-symbol used for sending a reference signal and a sub-symbol used for sending data, where N>1, and N is an integer.

The transceiver unit 1920 is configured to send or receive a reference signal by using a sub-symbol used for sending a reference signal, and send or receive data by using a sub-symbol used for sending data.

According to the communication apparatus provided in this application, the main symbol is split into a plurality of sub-symbols based on the position of the main symbol occupied by the reference signal when the single subcarrier width is used. A part of the plurality of sub-symbols are used for sending or receiving the reference signal, and a part of the plurality of sub-symbols are used for sending or receiving the data. This reduces overheads of sending the reference signal, while alignment between the plurality of main symbols is ensured. In other words, the overheads are reduced while frequency orthogonality of a plurality of receive ends is ensured, ensuring that data is successfully demodulated by the receive end.

It should be understood that, for a specific process of performing the foregoing corresponding steps by the units in the communication apparatus 1900, refer to related descriptions of the network device in the foregoing embodiments with reference to the method 1100 and FIG. 11. For example, the transceiver unit 1920 may perform receiving and sending steps in the foregoing method embodiments, and the processing unit 1910 may perform steps other than receiving and sending. Various specific processing is described in the method embodiment. For brevity, details are not described herein again.

When the execution body in the foregoing method 1100 and FIG. 11 is a terminal device, for a specific process of performing the foregoing corresponding steps by the units in the communication apparatus 1900, refer to the foregoing descriptions related to the terminal device in the related embodiments of the method 1100 and FIG. 11.

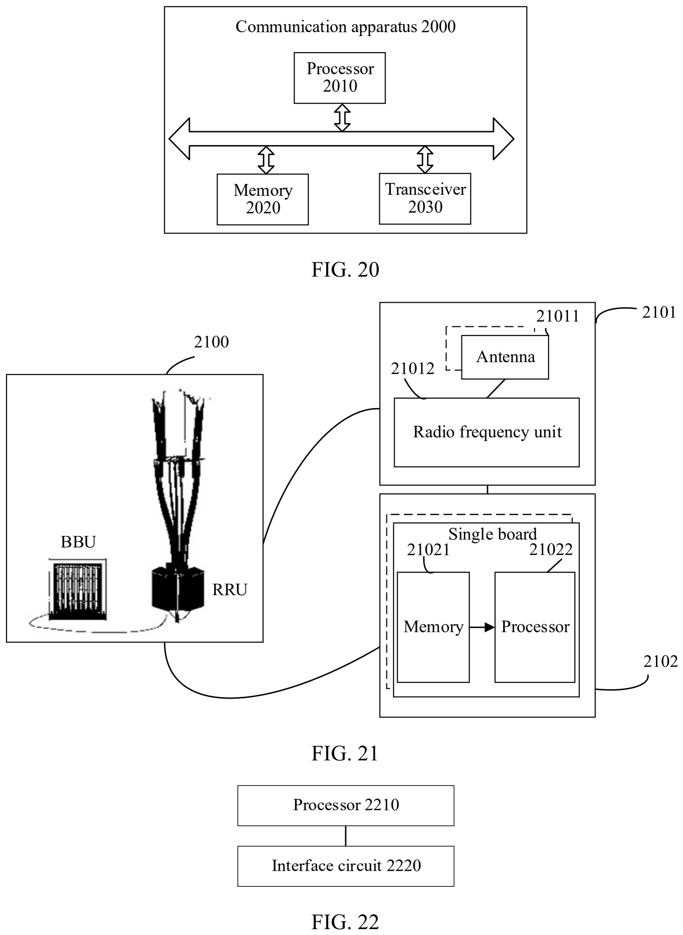

It should be understood that the transceiver unit 1920 may be a transceiver, an input/output interface, or an interface circuit. The storage unit may be a memory. The processing unit 1910 may be implemented by a processor. FIG. 20 is a block diagram of another example of a communication apparatus 2000 according to an embodiment of this application. As shown in FIG. 20, the communication apparatus 2000 may include a processor 2010, a memory 2020, and a transceiver 2030.

The communication apparatus 1900 shown in FIG. 19 or the communication apparatus 2000 shown in FIG. 20 can implement steps performed by the network device or the terminal device in embodiments of the foregoing method 1100. For similar descriptions, refer to the descriptions in the foregoing corresponding methods. To avoid repetition, details are not described herein again.

It should be further understood that the communication apparatus 1900 shown in FIG. 19 or the communication apparatus 2000 shown in FIG. 20 may be a network device or a terminal device.

It should be further understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element.

In an example, a unit in any one of the foregoing apparatuses may be one or more integrated circuits configured to implement the foregoing methods, for example, one or more application-specific integrated circuits (application-specific integrated circuit, ASIC), one or more digital signal processors (digital signal processor, DSP), one or more field programmable gate arrays (field programmable gate array, FPGA), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SoC).

FIG. 21 is a diagram of a structure of a network device 2100 according to an embodiment of this application. The network device 2100 may be configured to implement a function of the network device in the foregoing methods. The network device 2100 includes one or more radio frequency units, for example, a remote radio unit (remote radio unit, RRU) 2101, and one or more baseband units (baseband unit, BBU) (which may also be referred to as a digital unit, (digital unit, DU)) 2102. The RRU 2101 may be referred to as a transceiver unit, a transceiver machine, a transceiver circuit, a transceiver, or the like, and may include at least one antenna 21011 and a radio frequency unit 21012. The RRU 2101 is mainly configured to: receive or send a radio frequency signal, and perform conversion between a radio frequency signal and a baseband signal, for example, configured to send a signaling message in the foregoing embodiments to a terminal device. The BBU 2102 is mainly configured to: perform baseband processing, control a base station, and the like. The RRU 2101 and the BBU 2102 may be physically disposed together; or may be physically separated, that is, a distributed base station.

The BBU 2102 is a control center of the base station, may also be referred to as a processing unit, and is mainly configured to complete a baseband processing function, for example, channel coding, multiplexing, modulation, or spectrum spreading. For example, the BBU (the processing unit) 2102 may be configured to control the base station to perform an operation procedure related to the network device in the foregoing method embodiments.

In an example, the BBU 2102 may include one or more boards. A plurality of boards may jointly support a radio access network (for example, an LTE system or a 5G system) of a single access standard, or may respectively support radio access networks of different access standards. The BBU 2102 further includes a memory 21021 and a processor 21022. The memory 21021 is configured to store necessary instructions and data. For example, the memory 21021 stores the codebook and the like in the foregoing embodiments. The processor 21022 is configured to control the base station to perform a necessary action, for example, is configured to control the base station to perform an operation procedure related to the network device in the foregoing method embodiments. The memory 21021 and the processor 21022 may serve one or more boards. In other words, a memory and a processor may be disposed on each board. Alternatively, a plurality of boards may share a same memory and a same processor. In addition, a necessary circuit may further be disposed on each board.

In a possible implementation, with development of a system-on-a-chip (system-on-a-chip, SoC) technology, all or a part of functions of the part 2102 and the part 2101 may be implemented by using the SoC technology, for example, implemented by using one base station function chip. The base station function chip integrates devices such as a processor, a memory, and an antenna interface. A program of a base station-related function is stored in the memory, and the processor executes the program to implement the base station-related function. Optionally, the base station function chip can also read from an external memory of the chip, to implement the base station-related function.

It should be further understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element. In an example, a unit in any one of the foregoing apparatuses may be one or more integrated circuits configured to implement the foregoing methods, for example, one or more application-specific integrated circuits (application-specific integrated circuit, ASIC), one or more digital signal processors (digital signal processor, DSP), one or more field programmable gate arrays (field programmable gate array, FPGA), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SoC).

An embodiment of this application further provides a chip system. As shown in FIG. 22, the chip system includes at least one processor 2210 and at least one interface circuit 2220. The processor 2210 and the interface circuit 2220 may be interconnected through a line. For example, the interface circuit 2220 may be configured to receive a signal from another apparatus (for example, a memory of the network device 2100). For another example, the interface circuit 2220 may be configured to send a signal to another apparatus (for example, the processor 2010). For example, the interface circuit 2220 may read instructions stored in the memory, and send the instructions to the processor 2210. When the instructions are executed by the processor 2210, the terminal device is enabled to perform the steps performed by the terminal device in the foregoing embodiments. Certainly, the chip system may further include another discrete component. This is not specifically limited in this embodiment of this application.

An embodiment of this application further provides a computer-readable storage medium, the computer-readable storage medium is configured to store computer program code. The computer program includes instructions used for performing any communication method provided in the foregoing embodiments of this application. The readable medium may be a read-only memory (read-only memory, ROM) or a random access memory (random access memory, RAM). This is not limited in this embodiment of this application.

This application further provides a computer program product. The computer program product includes instructions. When the instructions are executed, a network device and a terminal device are enabled to perform corresponding operations in the foregoing methods.

An embodiment of this application further provides a chip disposed in a communication apparatus. The chip includes a processing unit and a communication unit. The processing unit may be, for example, a processor, and the communication unit may be, for example, an input/output interface, a pin, or a circuit. The processing unit may execute computer instructions, so that the communication apparatus is enabled to perform any communication method provided in the foregoing embodiments of this application.

Optionally, the computer instructions are stored in a storage unit.

Optionally, the storage unit is a storage unit in the chip, for example, a register or a cache. Alternatively, the storage unit may be a storage unit that is in the terminal and that is located outside the chip, for example, a ROM, another type of static storage device that can store static information and instructions, or a random RAM. Any processor mentioned above may be a CPU, a microprocessor, an ASIC, or one or more integrated circuits configured to control program execution of the feedback information transmission method. The processing unit and the storage unit may be decoupled, are disposed on different physical devices respectively, and are connected in a wired or wireless manner to implement respective functions of the processing unit and the storage unit, to support the system chip in implementing various functions in the foregoing embodiments. Alternatively, the processing unit and the memory may be coupled to the same device.

The terminal device, the computer-readable storage medium, the computer program product, or the chip provided in embodiments is configured to perform the corresponding method provided above. Therefore, for beneficial effects that can be achieved, refer to the beneficial effects of the corresponding method provided above. Details are not described herein again.

It may be understood that the memory in this embodiment of this application may be a volatile memory or a nonvolatile memory, or may include a volatile memory and a nonvolatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and is used as an external cache. There are a plurality of different types of RAMs, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In this application, names may be assigned to various objects such as messages/ information/devices/network elements/systems/apparatuses/actions/operations/procedures/concepts. It can be understood that the specific names do not constitute a limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

All or some of the methods in this embodiment of this application may be implemented by software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, all or some of procedures or functions in this embodiment of this application are executed. The computer may be a general-purpose computer, a dedicated computer, a computer network, or other programmable apparatuses. The computer programs or the instructions may be stored in a computer-readable storage medium, or transmission of the computer programs or the instructions may be performed by using the computer-readable storage medium. The computer-readable storage medium may be any usable medium accessible by the computer, or a data storage device, for example, a server, integrating one or more usable media.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a readable storage medium, and includes several instructions for enabling a computer device (which may be a personal computer, a server, or a network device) to perform all or some of the steps of the methods described in embodiments of this application. The readable storage medium includes any medium that can store program code, for example, a USB flash drive, a removable hard disk, a ROM, a RAM, a magnetic disk, or an optical disc.

**Claims**

1. A communication method, wherein the method comprises:

   determining a position of a main symbol occupied by a reference signal when a single subcarrier width is used, wherein the main symbol comprises N sub-symbols, the N sub-symbols comprise a sub-symbol used for sending a reference signal and a sub-symbol used for sending data, N>1, and N is an integer; and
   sending or receiving a reference signal by using the sub-symbol used for sending a reference signal, and sending or receiving data by using the sub-symbol used for sending data.

2. The method according to claim 1, wherein the main symbol having the single subcarrier width comprises a main symbol used for sending a reference signal and a main symbol used for sending data.

3. The method according to claim 1 or 2, wherein a position of the sub-symbol used for sending a reference signal or a position of the sub-symbol used for sending a data signal is predefined.

4. The method according to claim 3, wherein the position of the sub-symbol used for sending a reference signal comprises a position of a $1^{st}$ sub-symbol.

5. The method according to claim 3, wherein the position of the sub-symbol used for sending a reference signal comprises a position of a $2^{nd}$ sub-symbol.

6. The method according to any one of claims 1 to 5, wherein

   a subcarrier width of each sub-symbol is N times a subcarrier width of the main symbol; or
   a subcarrier width of each sub-symbol is related to at least one of a subcarrier width of the main symbol, N, and a length of a cyclic prefix CP of the main symbol.

7. The method according to any one of claims 1 to 6, wherein

   a length of each sub-symbol excluding a CP is 1/N of a length of the main symbol excluding the CP; and
   the length of each sub-symbol excluding the CP is 1/N of the length of the main symbol excluding the CP.

8. The method according to any one of claims 1 to 6, wherein
   a length of each sub-symbol excluding a CP is related to at least one of a length of the main symbol excluding a CP, the length of the CP of the main symbol, a length of a CP of each sub-symbol, and the quantity N of sub-symbols.

9. The method according to claim 8, wherein the length of each sub-symbol excluding the CP, the length of the main symbol excluding the CP, the length of the CP of the main symbol, the length of the CP of the sub-symbol, and the quantity N of sub-symbols satisfy the following formula:

$$A = \frac{L_D + L_{CP} - N \times A_{CP}}{N},$$

wherein

A represents the length of each sub-symbol excluding the CP, $L_D$ represents the length of the main symbol excluding the CP, $L_{CP}$ represents the length of the CP of the main symbol, N represents the quantity of sub-symbols, and $A_{CP}$ represents the length of the CP of each sub-symbol.

10. The method according to claim 8 or 9, wherein each sub-symbol has a same length of CP.

11. The method according to claim 10, wherein
the length of the CP of each sub-symbol is equal to the length of the CP of the main symbol.

12. The method according to any one of claims 1 to 9, wherein at least two of the N sub-symbols have different lengths of CPs.

13. The method according to claim 12, wherein a length of a CP of the sub-symbol used for sending a reference signal is greater than or equal to a length of a CP of the sub-symbol used for sending data signal.

14. The method according to claim 12 or 13, wherein the N sub-symbols comprise a sub-symbol with a first length and a sub-symbol with a second length, a quantity of sub-symbols with the first length is n, n≥1, n is an integer, and a length of a CP of the sub-symbol with the first length satisfies the following formula:

$$L_1 = \left[ L_{CP} - \left\lceil \frac{L_{cp}}{N} \right\rceil \times (N - n) \right] \Big/ n,$$

wherein

$L_1$ represents the length of the CP of the sub-symbol with the first length, $L_{CP}$ represents the length of the CP of the main symbol, N represents the quantity of sub-symbols, and n represents the quantity of sub-symbols with the first length; and
a length of a CP of the sub-symbol with the second length satisfies the following formula:

$$L_2 = \left\lceil \frac{L_{cp}}{N} \right\rceil,$$

wherein $L_2$ represents the length of the CP of the sub-symbol with the second length.

15. The method according to claim 12 or 13, wherein the N sub-symbols comprise a sub-symbol with a first length and a sub-symbol with a second length, a quantity of sub-symbols with the first length is n, n≥1, n is an integer, and a length of a CP of the sub-symbol with the first length satisfies the following formula:

$$L_1 = \left[ K_{CP} - \left\lceil \frac{K_{CP}}{N} \right\rceil \times (N - n) \right] \Big/ n,$$

wherein

$L_1$ represents the length of the CP of each sub-symbol with the first length, $K_{CP}$ represents a total length of CPs of the sub-symbols, N represents the quantity of sub-symbols, and n represents the quantity of sub-symbols with the first length; and
a length of a CP of the sub-symbol with the second length satisfies the following formula:

$$L_2 = \left\lceil \frac{K_{CP}}{N} \right\rceil,$$

wherein $L_2$ represents the length of the CP of the sub-symbol with the second length.

16. A communication apparatus, wherein the communication apparatus comprises:

a processing unit, wherein the processing unit is configured to determine a position of a main symbol occupied by a reference signal when a single subcarrier width is used, wherein the main symbol comprises N sub-symbols, the N sub-symbols comprise a sub-symbol used for sending a reference signal and a sub-symbol used for sending data, N>1, and N is an integer; and
a sending unit or a receiving unit, wherein the sending unit or the receiving unit is configured to send or receive a reference signal by using the sub-symbol used for sending a reference signal, and send or receive data by using the sub-symbol used for sending data.

17. The apparatus according to claim 16, wherein the main symbol having the single subcarrier width comprises a main symbol used for sending a reference signal and a main symbol used for sending data.

18. The apparatus according to claim 16 or 17, wherein a position of the sub-symbol used for sending a reference signal or a position of the sub-symbol used for sending a data signal is predefined.

19. The apparatus according to claim 18, wherein the position of the sub-symbol used for sending a reference signal comprises a position of a 1st sub-symbol.

20. The apparatus according to claim 18, wherein the position of the sub-symbol used for sending a reference signal comprises a position of a 2nd sub-symbol.

21. The apparatus according to any one of claims 16 to 20, wherein

a subcarrier width of each sub-symbol is N times a subcarrier width of the main symbol; or
a subcarrier width of each sub-symbol is related to at least one of a subcarrier width of the main symbol, N, and a length of a cyclic prefix CP of the main symbol.

22. The apparatus according to any one of claims 16 to 21, wherein

a length of each sub-symbol excluding a CP is 1/N of a length of the main symbol excluding the CP; and
the length of each sub-symbol excluding the CP is 1/N of the length of the main symbol excluding the CP.

23. The apparatus according to any one of claims 16 to 21, wherein
a length of each sub-symbol excluding a CP is related to at least one of a length of the main symbol excluding the CP, the length of the CP of the main symbol, a length of a CP of each sub-symbol, and the quantity N of sub-symbols.

24. The apparatus according to claim 23, wherein each sub-symbol has a same length of CP.

25. The apparatus according to claim 24, wherein
the length of the CP of each sub-symbol is equal to the length of the CP of the main symbol.

26. The apparatus according to any one of claims 16 to 23, wherein at least two of the N sub-symbols have different lengths of CPs.

27. The apparatus according to claim 26, wherein a length of a CP of the sub-symbol used for sending a reference signal is greater than or equal to a length of a CP of the sub-symbol used for sending data signal.

28. A communication apparatus, wherein the apparatus comprises at least one processor, and the at least one processor is coupled to at least one memory; and
the at least one processor is configured to execute a computer program or instructions in the at least one memory, to enable the method according to any one of claims 1 to 15 to be performed.

29. A computer-readable storage medium, wherein the computer-readable storage medium stores a computer program or instructions, and when a computer reads and executes the computer program or the instructions, the method according to any one of claims 1 to 15 is enabled to be performed.

30. A chip system, comprising a processor, wherein the processor is configured to invoke a computer program from a memory and run the computer program, to enable the method according to any one of claims 1 to 15 to be performed.

1 ms/slot

15 kHz

0.5 ms (500 μs)/slot

30 kHz

0.25 ms (250 μs)/slot

60 kHz

0.125 ms (125 μs)/slot

120 kHz

0.0625 ms (62.5 μs)/slot

240 kHz

<38.211-Table 4.3.2-1>

| μ | $N_{symb}^{slot}$ | $N_{slot}^{frame,μ}$ | $N_{slot}^{subframe,μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

FIG. 1

1 radio frame=10 subframes=10 slots=10 ms

1 subcarrier=15 kHz

1 subframe=1 slot=1 ms

1 slot=14 symbols=1 ms

• • •

(a)

1 radio frame=10 subframes=20 slots=10 ms

1 subcarrier=30 kHz

1 subframe=2 slots=1 ms

1 slot=14 symbols=0.5 ms

• • •

(b)

1 radio frame=10 subframes=40 slots=10 ms

1 subcarrier=60 kHz

1 subframe=4 slots=1 ms

1 slot=14 symbols=0.25 ms

• • •

(c)

1 radio frame=10 subframes=80 slots=10 ms

1 subcarrier=120 kHz

1 subframe=8 slots=1 ms

1 slot=14 symbols=0.125 ms

• • •

(d)

1 radio frame=10 subframes=160 slots=10 ms

1 subcarrier=240 kHz

1 subframe=16 slots=1 ms

1 slot=14 symbols=0.0625 ms

• • •

(e)

FIG. 2

(a)

(b)

FIG. 3

1 radio frame=10 subframes=40 slots=10 ms

1 subframe=4 slots=1 ms

1 subcarrier=60 kHz

1 slot=12 symbols=0.25 ms

• • •

FIG. 4

CP-OFDM symbol

Data

Reference signal

Data

Data

Reference signal

Data

FIG. 5

CP-OFDM symbol 1 CP-OFDM symbol 2

Data    Reference signal    Data    Data    Reference signal    Data

FIG. 6

Reference signal    Data    Data    Data    Data    Data    First receive end

Data    Reference signal    Data    Data    Reference signal    Data    Second receive end

FIG. 7

820

810

830

FIG. 8

FIG. 9

(a)

(b)

FIG. 10

Method 1100

| S1110 |
| Determine a position of a main symbol occupied by a reference signal when a single subcarrier width is used, where the main symbol includes N sub-symbols, the N sub-symbols include a sub-symbol used for sending a reference signal and a sub-symbol used for sending data, N>1, and N is an integer |

| S1120 |
| Send or receive a reference signal by using the sub-symbol used for sending a reference signal, and send or receive data by using the sub-symbol used for sending data |

**FIG. 11**

| Main symbol 0 | Main symbol 1 | Main symbol 2 | Main symbol 3 | Main symbol 4 | Main symbol 5 |

First terminal device

Second terminal device

Sub-symbol 0　Sub-symbol 1　　　　Sub-symbol 0　Sub-symbol 1

**FIG. 12**

$L_{CP}=144$　　$L_D=2048$

CP　　　　　　　　　　　　　　Main symbol

$L_D/4=512$　$L_{CP}/4=36$

CP　　CP　　CP　　CP　　Sub-symbol

Sub-symbol 0　Sub-symbol 1　Sub-symbol 2　Sub-symbol 3

**FIG. 13**

$L_{CP}=144$ $L_D=2048$

CP    Main symbol

$L_{CP}-L_{CP}/5\times(5-1)=32$    $L_D/4=512$    $L_{CP}/5=28$

CP    CP    CP    CP    CP    Sub-symbol

Sub-symbol 0    Sub-symbol 1    Sub-symbol 2    Sub-symbol 3    Sub-symbol 4

FIG. 14

$L_{CP}=144$ $L_D=2048$

CP    Main symbol

$[L_{CP}-L_{CP}/5\times(5-2)]/2=30$    $L_D/4=512$    $L_{CP}/5=28$    $[L_{CP}-L_{CP}/5\times(5-2)]/2=30$

CP    CP    CP    CP    CP    Sub-symbol

Sub-symbol 0    Sub-symbol 1    Sub-symbol 2    Sub-symbol 3    Sub-symbol 4

FIG. 15

$L_{CP}=144$ $L_D=2048$

CP    Main symbol

$A_{CP}=144$    404

CP    CP    CP    CP    Sub-symbol

Sub-symbol 0    Sub-symbol 1    Sub-symbol 2    Sub-symbol 3

FIG. 16

$L_{CP}=144$   $L_D=2048$

CP | Main symbol

$K_{CP}-K_{CP}/5\times(5-1)=147$   294   144

CP | CP | CP | CP | CP | Sub-symbol

Sub-symbol 0   Sub-symbol 1   Sub-symbol 2   Sub-symbol 3   Sub-symbol 4

## FIG. 17

$L_{CP}=144$   $L_D=2048$

CP | Main symbol

$[K_{CP}-K_{CP}/5\times(5-2)]/2=145$   294   144   $[K_{CP}-K_{CP}/5\times(5-2)]/2=145$

CP | CP | CP | CP | CP | Sub-symbol

Sub-symbol 0   Sub-symbol 1   Sub-symbol 2   Sub-symbol 3   Sub-symbol 4

## FIG. 18

Communication apparatus 1900

Processing unit 1910

Transceiver unit 1920

## FIG. 19

Communication apparatus 2000

Processor
2010

Memory
2020

Transceiver
2030

FIG. 20

2100

2101

21011

21012

Antenna

Radio frequency unit

BBU

RRU

Single board

21021

21022

Memory

Processor

2102

FIG. 21

Processor 2210

Interface circuit 2220

FIG. 22

## INTERNATIONAL SEARCH REPORT

| International application No. |
| --- |
| **PCT/CN2024/071434** |

| A. | CLASSIFICATION OF SUBJECT MATTER |
| --- | --- |

H04L 5/00(2006.01)i

According to International Patent Classification (IPC) or to both national classification and IPC

| B. | FIELDS SEARCHED |
| --- | --- |

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

CNTXT, VCN, DWPI, ENTXT, CNKI: 符号, 子符号, 参考信号, 导频, RS, 子载波, 宽度, 数据, 划分, 多个, 两个, 位置, CP, 长度, 开销, symbol, sub-symbol, reference signal, pilot, subcarrier, width, data, split, plurality, two, location, length

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 106105088 A (QUALCOMM INC.) 09 November 2016 (2016-11-09) description, paragraphs [0020]-[0021] and [0054] | 1-8,10-13,16-30 |
| X | CN 109792425 A (QUALCOMM INC.) 21 May 2019 (2019-05-21) description, paragraphs [0061]-[0073] and [0138]-[0141] | 1-8, 10-13, 16-30 |
| X | WO 2022207960 A1 (NOKIA TECHNOLOGIES OY) 06 October 2022 (2022-10-06) description, page 13 line 28-page 14 line 10, and page 25 line 23-page 26 line 27 | 1-8, 10-13, 16-30 |
| A | CN 115913498 A (HUAWEI TECHNOLOGIES CO., LTD.) 04 April 2023 (2023-04-04) entire document | 1-30 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 March 2024** | **20 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/071434**

| Patent document cited in search report | | | Publication date (day/month/year) | Patent family member(s) | | | Publication date (day/month/year) |
|---|---|---|---|---|---|---|---|
| CN | 106105088 | A | 09 November 2016 | WO | 2015148001 | A1 | 01 October 2015 |
| | | | | JP | 2017514366 | A | 01 June 2017 |
| | | | | US | 2015282158 | A1 | 01 October 2015 |
| | | | | KR | 20160138418 | A | 05 December 2016 |
| | | | | EP | 3681092 | A1 | 15 July 2020 |
| | | | | EP | 3123651 | A1 | 01 February 2017 |
| | | | | IN | 201627029576 | A | 17 October 2016 |
| | | | | BR | 112016022276 | A2 | 15 August 2017 |
| CN | 109792425 | A | 21 May 2019 | WO | 2018063531 | A1 | 05 April 2018 |
| | | | | BR | 112019006343 | A2 | 25 June 2019 |
| | | | | EP | 3520342 | A1 | 07 August 2019 |
| | | | | US | 2018097671 | A1 | 05 April 2018 |
| | | | | AU | 2017334335 | A1 | 07 March 2019 |
| | | | | IN | 201947006520 | A | 22 February 2019 |
| | | | | ID | 201903385 | A | 17 May 2019 |
| WO | 2022207960 | A1 | 06 October 2022 | EP | 4315774 | A1 | 07 February 2024 |
| | | | | CN | 117121449 | A | 24 November 2023 |
| CN | 115913498 | A | 04 April 2023 | None | | | |

Form PCT/ISA/210 (patent family annex) (July 2022)

**REFERENCES CITED IN THE DESCRIPTION**

**Patent documents cited in the description**

- CN 202310493207